(19)

Europäisches Patentamt

European Patent Office

Office européen des brevets

(11) **EP 4 390 472 A1**

(12) **EUROPEAN PATENT APPLICATION**
published in accordance with Art. 153(4) EPC

(43) Date of publication:
**26.06.2024 Bulletin 2024/26**

(51) International Patent Classification (IPC):
**G02B 1/10** *(2015.01)*   **G09F 9/30** *(2006.01)*

(21) Application number: **22858648.3**

(86) International application number:
**PCT/KR2022/011441**

(22) Date of filing: **03.08.2022**

(87) International publication number:
**WO 2023/022410 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.08.2021 KR 20210109850**

(71) Applicant: **Samsung SDI Co., Ltd.**
**Yongin-si, Gyeonggi-do 17084 (KR)**

(72) Inventors:
• **PARK, Kyoung Gon**
**Suwon-si, Gyeonggi-do 16678 (KR)**
• **MUN, Sung Hyun**
**Suwon-si, Gyeonggi-do 16678 (KR)**
• **LEE, Jin Young**
**Suwon-si, Gyeonggi-do 16678 (KR)**
• **HAN, Ji Young**
**Suwon-si, Gyeonggi-do 16678 (KR)**

• **KANG, Ji Won**
**Suwon-si, Gyeonggi-do 16678 (KR)**
• **KIM, Ji Yeon**
**Suwon-si, Gyeonggi-do 16678 (KR)**
• **KIM, Ji Ho**
**Suwon-si, Gyeonggi-do 16678 (KR)**
• **HAN, Jae Hyun**
**Suwon-si, Gyeonggi-do 16678 (KR)**
• **KIM, Il Jin**
**Suwon-si, Gyeonggi-do 16678 (KR)**
• **LEE, Gwang Hwan**
**Suwon-si, Gyeonggi-do 16678 (KR)**
• **KIM, Do Young**
**Suwon-si, Gyeonggi-do 16678 (KR)**
• **SHIN, Dong Myeong**
**Suwon-si, Gyeonggi-do 16678 (KR)**

(74) Representative: **Michalski Hüttermann & Partner**
**Patentanwälte mbB**
**Kaistraße 16A**
**40221 Düsseldorf (DE)**

(54) **OPTICAL MEMBER AND OPTICAL DISPLAY DEVICE COMPRISING SAME**

(57)    Provided are an optical member and an optical display device comprising same, the optical member comprising a support layer and an optically functional layer laminated on one surface of the support layer, wherein: the optically functional layer includes a groove having inclined surfaces; at least one convex portion extending from the flat portion of the optically functional layer is formed at each of the inclined surfaces; the convex portion is a curved surface with a radius of curvature of 1mm or greater; and each of the inclined surfaces satisfies expression 1.

【FIG. 1】

**Description**

[Technical Field]

The present invention relates to an optical member and an optical display device including the same.

[Background Art]

Recently, with increasing interest in foldable display devices, various optical elements used in foldable display devices are also required to be foldable. Accordingly, instead of a glass plate, a polyimide film or an ultra-thin glass plate is disposed at an outermost side of a display device to meet requirements for foldability.

However, the polyimide film and the ultra-thin glass plate are vulnerable to external impact or indentation. If a stylus pen is used on the polyimide film or the ultra-thin glass plate, this can cause impact or indentation-induced defects, such as bright spots and cracks, on a window and a panel. Accordingly, an optical member is further formed on an upper surface of the polyimide film or the ultra-thin glass plate, that is, at an outermost side of the display device, to reduce occurrence of bright spots and cracks.

In order to make the optical member foldable, there has been proposed a method of forming a groove on an outermost layer among a plurality of layers constituting the optical member. However, there is a problem that the groove is easily visible since the optical member is disposed at a viewer side of the display device.

Therefore, there is a need for an optical member that has good foldability due to low resistance to repeated folding, can minimize or eliminate visibility of a groove as described above, and is highly resistant to impact or indentation.

The background technique of the present invention is disclosed in Korean Patent Laid-open Publication No. 10-2013-0010233 and the like.

[Disclosure]

[Technical Problem]

It is one aspect of the present invention to provide an optical member that can be used in a foldable display device due to low resistance to repeated folding.

It is another aspect of the present invention to provide an optical member that can be disposed at an outermost side of a display device by minimizing or eliminating visibility of a groove.

It is a further aspect of the present invention to provide an optical member that is highly resistant to impact or indentation.

[Technical Solution]

One aspect of the present invention relates to an optical member.

1. The optical member includes: a support layer; and an optical functional layer formed on one surface of the support layer, wherein the optical functional layer includes a groove including an inclined surface, the inclined surface is formed with at least one convex portion extending from a flat portion of the optical functional layer, the convex portion is a curved surface having a radius of curvature of 1 mm or more, and the inclined surface satisfies Equation 1:

$$[\text{Equation 1}]$$

$$a \geq b$$

(in Equation 1,

a is a width of the inclined surface formed with the convex portion, and
b is a height of the inclined surface formed with the convex portion).

2. In embodiment 1, the inclined surface may be further formed with a concave portion connected to the convex portion.
3. In embodiments 1 and 2, the concave portion may be a curved surface having a radius of curvature of 1 mm or more.
4. In embodiments 1 to 3, a ratio of a to b (a/b) may range from 1 to 100,000.
5. In embodiments 1 to 4, the groove may further include a first surface connected to the concave portion.

6. In embodiments 1 to 5, a ratio of a width of the first surface to a maximum width of the groove may range from greater than 0 to 0.5 or less.

7. In embodiments 1 to 6, an angle $\alpha$ of a plane connecting the flat portion to the first surface with respect to a base of the inclined surface may range from greater than 0° to 45° or less.

8. In embodiments 1 to 7, the optical functional layer may be a hard coating layer.

Another aspect of the present invention relates to an optical display device including the optical member according to the present invention.

[Advantageous Effects]

The present invention provides an optical member that can be used in a foldable display device due to low resistance to repeated folding.

The present invention provides an optical member that can be disposed at an outermost side of a display device by minimizing or eliminating visibility of a groove.

The present invention provides an optical member that is highly resistant to impact or indentation.

[Description of Drawings]

FIG. 1 is a perspective view of an optical member according to one embodiment of the present invention.

FIG. 2 is a partially enlarged cross-sectional view of an optical functional layer of the optical member of FIG. 1.

FIG. 3 is a conceptual view illustrating radii of curvature set forth herein.

FIG. 4 is a cross-sectional view of an optical member according to another embodiment of the present invention.

FIG. 5 is a cross-sectional view of an optical member of a further embodiment of the present invention.

FIG. 6 shows a cross-sectional view of an optical member of Comparative Example 1 (FIG. 6(A)) and a cross-sectional view of an optical member of Comparative Example 2 (FIG. 6(B)).

[Best Mode]

Exemplary embodiments of the present invention will be described in detail with reference to the accompanying drawings to facilitate practice by one of ordinary skill in the art to which the present invention pertains. It should be understood that the present invention may be embodied in different ways and is not limited to the following embodiments.

In the drawings, portions irrelevant to the description will be omitted for clarity. Like components will be denoted by like reference numerals throughout the specification. Lengths, sizes, and the like of components in the drawings are for the purpose of illustrating the invention, and the invention is not limited thereto.

Herein, spatially relative terms such as "upper" and "lower" are defined with reference to the accompanying drawings. Thus, it will be understood that the term "upper surface" can be used interchangeably with the term "lower surface".

Herein, "Young's modulus" of a support layer is a value measured on a type V specimen at a temperature of 25°C and a tensile rate of 100 mm/min using a universal testing machine (UTM) (Instron Corp.) in accordance with the tensile test method specified in ASTM D638.

Herein, "storage modulus" of a support layer is a value measured at -20°C and 85°C in tensile test mode under conditions of a frequency of 1 Hz and a heating rate of 2°C/min from -70°C to 120°C using a dynamic mechanical analyzer (DMA).

Herein, "storage modulus" of an adhesive layer is a value measured in auto-strain mode with a strain of 1% at a shear rate of from 0.1 rad/sec to 100 rad/sec and a heating rate of 5°C/min from -20°C to 90°C using a dynamic viscoelasticity meter (ARES G2, TA Instruments). A specimen for evaluation of storage modulus is prepared by stacking adhesive layers each having a thickness of 50 $\mu$m to a thickness of 500 $\mu$m and perforating the resulting stack using a perforator having a diameter of 8 mm.

Herein, the term "(meth)acryl" refers to acryl and/or methacryl.

As used herein to represent a specific numerical range, the expression "X to Y" means "$\geq$ X and $\leq$ Y".

The present invention provides an optical member that can be used in a foldable display device due to low resistance to repeated folding, can be disposed at an outermost side of a display device by minimizing or eliminating visibility of a groove described below, and is highly resistant to impact or indentation.

In one embodiment, the optical member may be disposed at a viewer side of an optical display device. Specifically, the optical member may be disposed at a viewer side of an optical display device with an optical functional layer disposed as an outermost layer of the optical member.

The optical member includes: a support layer; and an optical functional layer formed on one surface of the support layer, wherein the optical functional layer includes a groove having an inclined surface, and the inclined surface is formed with at least one convex portion extending from a flat portion of the optical functional layer, the convex portion is a curved surface having a radius of curvature of 1 mm or more, and the inclined surface satisfies Equation 1:

[Equation 1]

$$a \geq b$$

(in Equation 1,

a is a width of the inclined surface formed with the convex portion, and
b is a height of the inclined surface formed with the convex portion).

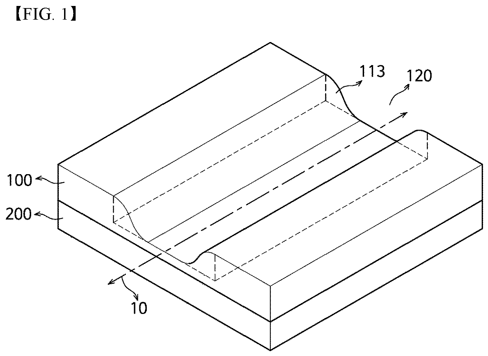

Hereinafter, an optical member according to one embodiment of the present invention will be described with reference to FIG. 1, FIG. 2, and FIG. 3.

Referring to FIG. 1, the optical member may include a support layer (200) and an optical functional layer (100) formed on an upper surface of the support layer (200).

[Support layer]

The support layer (200) may support the optical functional layer (100).

The support layer (200) may include a film or coating layer formed of a composition including an optically clear resin. For example, the support layer may be formed of at least one resin selected from among cellulose based resins, such as triacetyl cellulose (TAC), polyester based resins, such as polyethylene terephthalate (PET), polybutylene terephthalate, polyethylene naphthalate, and polybutylene naphthalate, cyclic polyolefin based resins, polycarbonate based resins, polyether sulfone based resins, polysulfone based resins, polyamide based resins, polyimide based resins, polyolefin based resins, polyarylate based resins, polyvinyl alcohol based resins, polyvinyl chloride based resins, polyvinylidene chloride based resins, and polyurethane based resins.

In one embodiment, the support layer may be a polyester based film including polyethylene terephthalate (PET), polybutylene terephthalate, polyethylene naphthalate, polybutylene naphthalate, and the like, preferably a PET film. The PET film may provide light-transmissive properties to the optical member.

In another embodiment, the support layer may be a polyurethane based resin film. The polyurethane based resin film may help to improve impact resistance, indentation resistance, and flexural reliability at low and high temperatures of the optical member.

A polyurethane based resin may be prepared from a bi- or higher functional polyol and a bi- or higher functional isocyanate. The bi- or higher functional polyol may include at least one selected from among an aromatic based polyol, an aliphatic based polyol, and an alicyclic based polyol. The bi- or higher functional isocyanate may include any aliphatic, alicyclic or aromatic isocyanate. The polyurethane based resin may be prepared by any typical method known to those skilled in the art.

The polyurethane based resin film may include a thermoplastic polyurethane based resin film prepared by melt extrusion using the polyurethane based resin or a cast polyurethane based resin film prepared by solution casting. As compared with the thermoplastic polyurethane based resin film, the cast polyurethane based resin film is completely free from striping, gelling, and/or opacity when irradiated with light and is thus advantageous for improving appearance of the optical member.

The support layer, preferably the polyurethane based film, may have a Young's modulus of 80 MPa to 500 MPa, specifically 80 MPa, 90 MPa, 100 MPa, 110 MPa, 120 MPa, 130 MPa, 140 MPa, 150 MPa, 160 MPa, 170 MPa, 180 MPa, 190 MPa, 200 MPa, 210 MPa, 220 MPa, 230 MPa, 240 MPa, 250 MPa, 260 MPa, 270 MPa, 280 MPa, 290 MPa, 300 MPa, 310 MPa, 320 MPa, 330 MPa, 340 MPa, 350 MPa, 360 MPa, 370 MPa, 380 MPa, 390 MPa, 400 MPa, 410 MPa, 420 MPa, 430 MPa, 440 MPa, 450 MPa, 460 MPa, 470 MPa, 480 MPa, 490 MPa, or 500 MPa, preferably 80 MPa to 300 MPa, more preferably 100 MPa to 200 MPa, as measured at 25°C. Within this range, the support layer can help to improve impact resistance and flexural reliability at low and high temperatures of the optical member.

The support layer, preferably the polyurethane based film, may have a storage modulus of 900 MPa to 1,500 MPa, specifically 900 MPa, 950 MPa, 1,000 MPa, 1,050 MPa, 1,100 MPa, 1,150 MPa, 1,200 MPa, 1,250 MPa, 1,300 MPa, 1,350 MPa, 1,400 MPa, 1,450 MPa, or 1,500 MPa, specifically 900 MPa to 1,200 MPa, as measured at -20°C. Within this range, a manufacturing process of the polyurethane resin film can be facilitated and the optical member can have good folding reliability at low temperatures.

The support layer, for example, the polyurethane based film, may have a storage modulus of 15 MPa to 100 MPa, specifically 15 MPa, 20 MPa, 25 MPa, 30 MPa, 35 MPa, 40 MPa, 45 MPa, 50 MPa, 55 MPa, 60 MPa, 65 MPa, 70 MPa, 75 MPa, 80 MPa, 85 MPa, 90 MPa, 95 MPa, or 100 MPa, preferably 50 MPa to 90 MPa, as measured at 85°C. Within this range, a manufacturing process of the polyurethane based film can be facilitated and the optical member can have good flexural reliability under high temperature conditions and/or high temperature and high humidity conditions.

The Young's modulus and storage modulus of the support layer may be adjusted to the above ranges by adjusting a ratio between monomers constituting a resin forming the support layer or by adjusting a molecular weight of the resin.

The support layer (200) may have a thickness of 10 $\mu$m to 200 $\mu$m, specifically 10 $\mu$m, 20 $\mu$m, 30 $\mu$m, 40 $\mu$m, 50 $\mu$m, 60 $\mu$m, 70 $\mu$m, 80 $\mu$m, 90 $\mu$m, 100 $\mu$m, 110 $\mu$m, 120 $\mu$m, 130 $\mu$m, 140 $\mu$m, 150 $\mu$m, 160 $\mu$m, 170 $\mu$m, 180 $\mu$m, 190 $\mu$m, or 200 $\mu$m, preferably 50 $\mu$m to 100 $\mu$m. Within this range, the support layer can help to improve impact resistance and flexural reliability of the optical member while allowing reduction in thickness of the optical member.

[Optical functional layer]

The optical functional layer (100) is formed on the upper surface of the support layer (200) to provide an optical member that can be used in a foldable display device due to low resistance to repeated folding, can minimize or eliminate visibility of a groove described below, and is highly resistant to impact and indentation.

The optical functional layer (100) may have an index of refraction of 1.40 to 1.75, specifically 1.40, 1.45, 1.50, 1.55, 1.60, 1.65, 1.70, or 1.75, preferably 1.45 to 1.65. Within this range, the optical functional layer 100 can help to minimize visibility of a groove described below.

The optical functional layer (100) includes a flat portion (112) and a groove (120).

In one embodiment, the optical functional layer (100) includes a groove (120), a flat portion (112) extending from one distal end of the groove (120), and a flat portion (112) extending from the other distal end of the groove (120).

The flat portion (112) may be a surface that is connected to the groove (120) and forms an uppermost surface of the optical functional layer. Preferably, the flat portion (112) has a greater height than a first surface (111) described below, which may help to improve impact resistance and indentation resistance of the optical member.

The flat portion (112) may have a height (H2) of 10 $\mu$m to 1,000 $\mu$m, specifically 10 $\mu$m, 20 $\mu$m, 30 $\mu$m, 40 $\mu$m, 50 $\mu$m, 60 $\mu$m, 70 $\mu$m, 80 $\mu$m, 90 $\mu$m, 100 $\mu$m, 110 $\mu$m, 120 $\mu$m, 130 $\mu$m, 140 $\mu$m, 150 $\mu$m, 160 $\mu$m, 170 $\mu$m, 180 $\mu$m, 190 $\mu$m, 200 $\mu$m, 210 $\mu$m, 220 $\mu$m, 230 $\mu$m, 240 $\mu$m, 250 $\mu$m, 300 $\mu$m, 310 $\mu$m, 320 $\mu$m, 330 $\mu$m, 340 $\mu$m, 350 $\mu$m, 360 $\mu$m, 370 $\mu$m, 380 $\mu$m, 390 $\mu$m, 400 $\mu$m, 410 $\mu$m, 420 $\mu$m, 430 $\mu$m, 440 $\mu$m, 450 $\mu$m, 460 $\mu$m, 470 $\mu$m, 480 $\mu$m, 490 $\mu$m, 500 $\mu$m, 550 $\mu$m, 600 $\mu$m, 650 $\mu$m, 700 $\mu$m, 750 $\mu$m, 800 $\mu$m, 850 $\mu$m, 900 $\mu$m, 950 $\mu$m, or 1,000 $\mu$m, for example, 10 $\mu$m to 500 $\mu$m or 30 $\mu$m to 100 $\mu$m. Within this range, the flat portion can improve impact resistance and indentation resistance of the optical member.

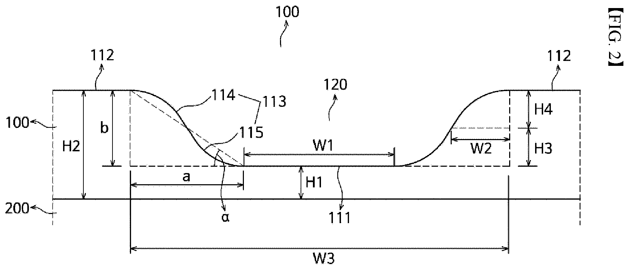

Referring to FIG. 1, the groove (120) may have a stripe-like shape. Herein, "stripe-like shape" means that the groove (120) extends lengthwise in a longitudinal direction thereof (in FIG. 2, a transverse direction of the groove (130) is shown).

Referring to FIG. 2, the groove (120) includes an inclined surface (113) and a first surface (111) connected to the inclined surface (113). The groove (120) extends from the flat portion (112) of the optical functional layer (100) and is formed in an engraved pattern.

The inclined surface (113) is formed with at least one a convex portion (114) extending from the flat portion (112). The convex portion (114) is convex in a direction from the optical functional layer (100) toward the groove (120). The flat portion (112) and the convex portion (114) are directly connected to each other, and the convex portion (114) is a curved surface extending from the flat portion (112).

The convex portion (114) is a curved surface having a radius of curvature of 1 mm or more, and the inclined surface (113) satisfies Equation 1:

$$[\text{Equation 1}]$$

$$a \geq b$$

(in Equation 1,

a is a width of the inclined surface formed with the convex portion, and
b is a height of the inclined surface formed with the convex portion).

The inventors of the present invention have confirmed that, when the convex portion (114) has a radius of curvature of 1 mm or more and the inclined surface satisfies Equation 1, the optical member can be used in a foldable display device due to low resistance to repeated folding and can minimize or eliminate visibility of the groove.

Specifically, the convex portion (114) may have a radius of curvature (R1) of 1 mm, 5 mm, 10 mm, 15 mm, 20 mm, 25 mm, 30 mm, 35 mm, 40 mm, 45 mm, 50 mm, 55 mm, 60 mm, 65 mm, 70 mm, 75 mm, 80 mm, 85 mm, 90 mm, 95 mm, 100 mm, 105 mm, 110 mm, 115 mm, 120 mm, 125 mm, 130 mm, 135 mm, 140 mm, 145 mm, 150 mm, 155 mm, 160 mm, 165 mm, 170 mm, 175 mm, 180 mm, 185 mm, 190 mm, 195 mm, or 200 mm, preferably 10 mm or more, more preferably 50 mm to 200 mm. Within this range, the desired effects of the present invention can be easily realized and the optical functional layer can be easily designed to improve indentation resistance of the optical member.

Each of a and b may be adjusted to a value within a range that satisfies Equation 1.

In one embodiment, a may have a value of greater than 1 $\mu$m to 100,000 $\mu$m or less, specifically 5 $\mu$m, 50 $\mu$m, 100 $\mu$m, 150 $\mu$m, 200 $\mu$m, 250 $\mu$m, 300 $\mu$m, 350 $\mu$m, 400 $\mu$m, 450 $\mu$m, 500 $\mu$m, 550 $\mu$m, 600 $\mu$m, 650 $\mu$m, 700 $\mu$m, 750 $\mu$m, 800 $\mu$m, 850 $\mu$m, 900 $\mu$m, 950 $\mu$m, 1,000 $\mu$m, 1,500 $\mu$m, 2,000 $\mu$m, 2,500 $\mu$m, 3,000 $\mu$m, 3,500 $\mu$m, 4,000 $\mu$m, 4,500 $\mu$m, 5,000 $\mu$m, 5,500 $\mu$m, 6,000 $\mu$m, 6,500 $\mu$m, 7,000 $\mu$m, 7,500 $\mu$m, 8,000 $\mu$m, 8,500 $\mu$m, 9,000 $\mu$m, 9,500 $\mu$m, 10,000 $\mu$m, 10,500 $\mu$m, 11,000 $\mu$m, 11,500 $\mu$m, 12,000 $\mu$m, 12,500 $\mu$m, 13,000 $\mu$m, 13,500 $\mu$m, 14,000 $\mu$m, 14,500 $\mu$m, 15,000 $\mu$m, 15,500 $\mu$m, 16,000 $\mu$m, 16,500 $\mu$m, 17,000 $\mu$m, 17,500 $\mu$m, 18,000 $\mu$m, 18,500 $\mu$m, 19,000 $\mu$m, 19,500 $\mu$m, 20,000 $\mu$m, 20,500 $\mu$m, 21,000 $\mu$m, 21,500 $\mu$m, 22,000 $\mu$m, 22,500 $\mu$m, 23,000 $\mu$m, 23,500 $\mu$m, 24,000 $\mu$m, 24,500 $\mu$m, 25,000 $\mu$m, 25,500 $\mu$m, 26,000 $\mu$m, 26,500 $\mu$m, 27,000 $\mu$m, 27,500 $\mu$m, 28,000 $\mu$m, 28,500 $\mu$m, 29,000 $\mu$m, 29,500 $\mu$m, 30,000 $\mu$m, 35,000 $\mu$m, 40,000 $\mu$m, 45,000 $\mu$m, 50,000 $\mu$m, 55,000 $\mu$m, 60,000 $\mu$m, 65,000 $\mu$m, 70,000 $\mu$m, 75,000 $\mu$m, 80,000 $\mu$m, 85,000 $\mu$m, 90,000 $\mu$m, 95,000 $\mu$m, or 100,000 $\mu$m, for example 10 $\mu$m to 70,000 $\mu$m, specifically 1,000 $\mu$m to 30,000 $\mu$m, and b may have a value of 1 $\mu$m to 300 $\mu$m, specifically 1 $\mu$m, 10 $\mu$m, 20 $\mu$m, 30 $\mu$m, 40 $\mu$m, 50 $\mu$m, 60 $\mu$m, 70 $\mu$m, 80 $\mu$m, 90 $\mu$m, 100 $\mu$m, 110 $\mu$m, 120 $\mu$m, 130 $\mu$m, 140 $\mu$m, 150 $\mu$m, 160 $\mu$m, 170 $\mu$m, 180 $\mu$m, 190 $\mu$m, 200 $\mu$m, 210 $\mu$m, 220 $\mu$m, 230 $\mu$m, 240 $\mu$m, 250 $\mu$m, 260 $\mu$m, 270 $\mu$m, 280 $\mu$m, 290 $\mu$m, or 300 $\mu$m, for example 10 $\mu$m to 200 $\mu$m. Within these ranges, the desired effects of the present invention can be easily realized and manufacture of the optical functional layer can be facilitated.

A ratio of a to b (a/b) may be from 1 to 100,000, specifically 1, 50, 100, 150, 200, 250, 300, 350, 400, 450, 500, 550, 650, 700, 750, 800, 850, 900, 950, 1,000, 1,500, 2,000, 2,500, 3,000, 3,500, 4,000, 4,500, 5,000, 5,500, 6,000, 6,500, 7,000, 7,500, 8,000, 8,500, 9,000, 9,500, 10,000, 15,000, 20,000, 25,000, 30,000, 35,000, 40,000, 45,000, 50,000, 55,000, 60,000, 65,000, 70,000, 75,000, 80,000, 85,000, 90,000, 95,000, or 100,000, preferably from 1 to 7,000, more preferably 10 to 2,000. Within this range, the optical member can have low resistance to repeated folding without sacrificing resistance to indentation.

The inclined surface (113) may be further formed with a concave portion (115) connected to the convex portion (114).

The concave portion (115) is convex in a direction from the groove (120) toward the optical functional layer (130).

The concave portion (115) may be a curved surface having a radius of curvature (R2) of 1 mm or more. Within this range, the optical member can be used in a foldable display device due to low resistance to repeated folding and can minimize visibility of the groove.

Specifically, the concave portion (115) may have a radius of curvature (R2) of 1 mm, 5 mm, 10 mm, 15 mm, 20 mm, 25 mm, 30 mm, 35 mm, 40 mm, 45 mm, 50 mm, 55 mm, 60 mm, 65 mm, 70 mm, 75 mm, 80 mm, 85 mm, 90 mm, 95 mm, 100 mm, 105 mm, 110 mm, 115 mm, 120 mm, 125 mm, 130 mm, 135 mm, 140 mm, 145 mm, 150 mm, 155 mm, 160 mm, 165 mm, 170 mm, 175 mm, 180 mm, 185 mm, 190 mm, 195 mm, or 200 mm, preferably, 10 mm or more, more preferably 50 mm to 200 mm. Within this range, the desired effects of the present invention can be easily realized and the optical functional layer can be easily designed to improve indentation resistance of the optical member.

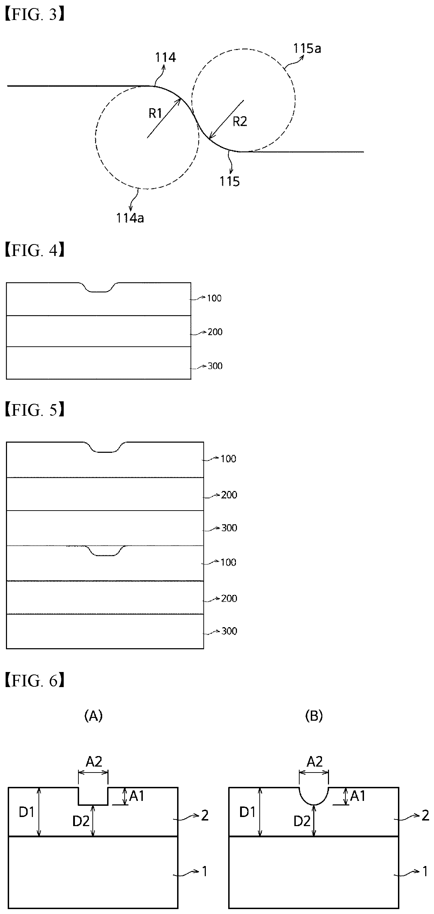

Referring to FIG. 3, the radii of curvature (R1, R2) refer to a radius of an imaginary circle (114a) having the curved surface of the convex portion (114) as part thereof and a radius of an imaginary circle (115a) having the curved surface of the concave portion (115) as part thereof, respectively. The inventors of the present invention have studied a solution to improve folding reliability of the optical member and to reduce visibility of the groove when the optical member is disposed at a viewer side of a display device. As a result, the inventors of the present invention have confirmed that the above-described effects can be achieved by designing each of the convex portion and the concave portion as a curved surface having a radius of curvature of 1 mm or more, rather than simply designing the convex portion and the concave portion as curved surfaces.

A height (H3) of the concave portion (113) may be adjusted depending on the degree to which the optical member is folded. For example, the concave portion (113) may have a height (H3) of 1 $\mu$m to 300 $\mu$m, specifically 1 $\mu$m, 5 $\mu$m, 10 $\mu$m, 15 $\mu$m, 20 $\mu$m, 25 $\mu$m, 30 $\mu$m, 35 $\mu$m, 40 $\mu$m, 45 $\mu$m, 50 $\mu$m, 55 $\mu$m, 60 $\mu$m, 65 $\mu$m, 70 $\mu$m, 75 $\mu$m, 80 $\mu$m, 85 $\mu$m, 90 $\mu$m, 95 $\mu$m, 100 $\mu$m, 105 $\mu$m, 110 $\mu$m, 115 $\mu$m, 120 $\mu$m, 125 $\mu$m, 130 $\mu$m, 135 $\mu$m, 140 $\mu$m, 145 $\mu$m, 150 $\mu$m, 155 $\mu$m, 160 $\mu$m, 165 $\mu$m, 170 $\mu$m, 175 $\mu$m, 180 $\mu$m, 185 $\mu$m, 190 $\mu$m, 195 $\mu$m, 200 $\mu$m, 205 $\mu$m, 210 $\mu$m, 215 $\mu$m, 220 $\mu$m, 225 $\mu$m, 230 $\mu$m, 235 $\mu$m, 240 $\mu$m, 245 $\mu$m, 250 $\mu$m, 255 $\mu$m, 260 $\mu$m, 265 $\mu$m, 270 $\mu$m, 275 $\mu$m, 280 $\mu$m, 285 $\mu$m, 290 $\mu$m, 295 $\mu$m, or 300 $\mu$m, for example, 10 $\mu$m to 200 $\mu$m. Within this range, formation of the concave portion can be facilitated.

A maximum width (W2) and height (H4) of the convex portion (114) may be adjusted depending on the degree to which the optical member is folded.

For example, the convex portion (114) may have a maximum width (W2) of 1 μm to 100,000 μm, specifically 5 μm, 50 μm, 100 μm, 150 μm, 200 μm, 250 μm, 300 μm, 350 μm, 400 μm, 450 μm, 500 μm, 550 μm, 600 μm, 650 μm, 700 μm, 750 μm, 800 μm, 850 μm, 900 μm, 950 μm, 1,000 μm, 1,500 μm, 2,000 μm, 2,500 μm, 3,000 μm, 3,500 μm, 4,000 μm, 4,500 μm, 5,000 μm, 5,500 μm, 6,000 μm, 6,500 μm, 7,000 μm, 7,500 μm, 8,000 μm, 8,500 μm, 9,000 μm, 9,500 μm, 10,000 μm, 10,500 μm, 11,000 μm, 11,500 μm, 12,000 μm, 12,500 μm, 13,000 μm, 13,500 μm, 14,000 μm, 14,500 μm, 15,000 μm, 15,500 μm, 16,000 μm, 16,500 μm, 17,000 μm, 17,500 μm, 18,000 μm, 18,500 μm, 19,000 μm, 19,500 μm, 20,000 μm, 20,500 μm, 21,000 μm, 21,500 μm, 22,000 μm, 22,500 μm, 23,000 μm, 23,500 μm, 24,000 μm, 24,500 μm, 25,000 μm, 25,500 μm, 26,000 μm, 26,500 μm, 27,000 μm, 27,500 μm, 28,000 μm, 28,500 μm, 29,000 μm, 29,500 μm, 30,000 μm, 35,000 μm, 40,000 μm, 45,000 μm, 50,000 μm, 55,000 μm, 60,000 μm, 65,000 μm, 70,000 μm, 75,000 μm, 80,000 μm, 85,000 μm, 90,000 μm, 95,000 μm, or 100,000 μm, for example, 10 μm to 70,000 μm. Within this range, formation of the convex portion can be facilitated.

The convex portion (114) may have a height (H4) of 1 μm to 300 μm, specifically 1 μm, 5 μm, 10 μm, 15 μm, 20 μm, 25 μm, 30 μm, 35 μm, 40 μm, 45 μm, 50 μm, 55 μm, 60 μm, 65 μm, 70 μm, 75 μm, 80 μm, 85 μm, 90 μm, 95 μm, 100 μm, 105 μm, 110 μm, 115 μm, 120 μm, 125 μm, 130 μm, 135 μm, 140 μm, 145 μm, 150 μm, 155 μm, 160 μm, 165 μm, 170 μm, 175 μm, 180 μm, 185 μm, 190 μm, 195 μm, 200 μm, 205 μm, 210 μm, 215 μm, 220 μm, 225 μm, 230 μm, 235 μm, 240 μm, 245 μm, 250 μm, 255 μm, 260 μm, 265 μm, 270 μm, 275 μm, 280 μm, 285 μm, 290 μm, 295 μm, or 300 μm, for example, 10 μm to 200 μm. Within this range, formation of the second convex portion can be facilitated.

The groove (130) further includes a first surface (111) connected to the concave portion.

The first surface (111) may assist in reduction in resistance of the optical member upon folding the optical member. That is, the first surface (111) may reduce resistance of the optical member upon folding the optical member about a folding axis (10) toward the optical functional layer (100) as shown in FIG. 1.

The first surface (111) may form a lowermost surface of the groove (130). The first surface (111) may be a flat surface or a non-flat surface. The non-flat surface is a curved surface and may be a convex surface or a concave surface. Preferably, the first surface (111) is a flat surface to facilitate manufacture of the optical functional layer (100) and to facilitate formation of another optical member on the upper surface of the optical functional layer.

The first surface (111) may have a height H1 of greater than 0 μm to 200 μm or less, specifically 1 μm, 5 μm, 10 μm, 15 μm, 20 μm, 25 μm, 30 μm, 35 μm, 40 μm, 45 μm, 50 μm, 55 μm, 60 μm, 65 μm, 70 μm, 75 μm, 80 μm, 85 μm, 90 μm, 95 μm, 100 μm, 105 μm, 110 μm, 115 μm, 120 μm, 125 μm, 130 μm, 135 μm, 140 μm, 145 μm, 150 μm, 155 μm, 160 μm, 165 μm, 170 μm, 175 μm, 180 μm, 185 μm, 190 μm, 195 μm, or 200 μm, for example, 1 μm to 50 μm. Within this range, the first surface (111) can reduce resistance of the optical member upon folding, thereby improving foldability of the optical member.

The first surface (111) may have a maximum width (W1) of 0 μm to 50,000 μm, specifically 5 μm, 50 μm, 100 μm, 150 μm, 200 μm, 250 μm, 300 μm, 350 μm, 400 μm, 450 μm, 500 μm, 550 μm, 600 μm, 650 μm, 700 μm, 750 μm, 800 μm, 850 μm, 900 μm, 950 μm, 1,000 μm, 1,500 μm, 2,000 μm, 2,500 μm, 3,000 μm, 3,500 μm, 4,000 μm, 4,500 μm, 5,000 μm, 5,500 μm, 6,000 μm, 6,500 μm, 7,000 μm, 7,500 μm, 8,000 μm, 8,500 μm, 9,000 μm, 9,500 μm, 10,000 μm, 10,500 μm, 11,000 μm, 11,500 μm, 12,000 μm, 12,500 μm, 13,000 μm, 13,500 μm, 14,000 μm, 14,500 μm, 15,000 μm, 15,500 μm, 16,000 μm, 16,500 μm, 17,000 μm, 17,500 μm, 18,000 μm, 18,500 μm, 19,000 μm, 19,500 μm, 20,000 μm, 20,500 μm, 21,000 μm, 21,500 μm, 22,000 μm, 22,500 μm, 23,000 μm, 23,500 μm, 24,000 μm, 24,500 μm, 25,000 μm, 25,500 μm, 26,000 μm, 26,500 μm, 27,000 μm, 27,500 μm, 28,000 μm, 28,500 μm, 29,000 μm, 29,500 μm, 30,000 μm, 35,000 μm, 40,000 μm, 45,000 μm, or 50,000 μm, for example, 1 μm to 30,000 μm, preferably 5,000 μm to 25,000 μm. Within this range, the first surface (111) can improve impact resistance and indentation resistance of the optical member.

An angle (α) of plane connecting the flat surface (112) to the first surface (111) (indicated by the dotted line in FIG. 2) with respect to a base of the inclined surface (113) may range from greater than 0° to 45° or less. Within this range, the inclined surface (113) can easily satisfy Equation 1. Specifically, the angle (α) may be 1°, 2°, 3°, 4°, 5°, 6°, 7°, 8°, 9°, 10°, 11°, 12°, 13°, 14°, 15°, 16°, 17°, 18°, 19°, 20°, 21°, 22°, 23°, 24°, 25°, 26°, 27°, 28°, 29°, 30°, 31°, 32°, 33°, 34°, 35°, 36°, 37°, 38°, 39°, 40°, 41°, 42°, 43°, 44°, or 45°, for example, 0° to 10°.

The groove (120) may be disposed in a folding region when the optical member is used in an optical display device. Thus, depending on the number of folding regions, one or more grooves (120) may be formed in the optical functional layer.

A ratio of the width (W1) of the first surface (111) to the maximum width (W3) of the groove (120) may be greater than 0 to less than 1, specifically 0.01, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, or 0.99, for example, greater than 0 to 0.5 or less, more specifically greater than 0 to 0.3 or less. Within this range, the optical member can have good foldability.

The groove (120) may have a maximum width (W3) of 2 μm to 200,000 μm, specifically 2 μm, 50 μm, 100 μm, 150 μm, 200 μm, 250 μm, 300 μm, 350 μm, 400 μm, 450 μm, 500 μm, 550 μm, 600 μm, 650 μm, 700 μm, 750 μm,

800 μm, 850 μm, 900 μm, 950 μm, 1,000 μm, 1,500 μm, 2,000 μm, 2,500 μm, 3,000 μm, 3,500 μm, 4,000 μm, 4,500 μm, 5,000 μm, 5,500 μm, 6,000 μm, 6,500 μm, 7,000 μm, 7,500 μm, 8,000 μm, 8,500 μm, 9,000 μm, 9,500 μm, 10,000 μm, 10,500 μm, 11,000 μm, 11,500 μm, 12,000 μm, 12,500 μm, 13,000 μm, 13,500 μm, 14,000 μm, 14,500 μm, 15,000 μm, 15,500 μm, 16,000 μm, 16,500 μm, 17,000 μm, 17,500 μm, 18,000 μm, 18,500 μm, 19,000 μm, 19,500 μm, 20,000 μm, 20,500 μm, 21,000 μm, 21,500 μm, 22,000 μm, 22,500 μm, 23,000 μm, 23,500 μm, 24,000 μm, 24,500 μm, 25,000 μm, 25,500 μm, 26,000 μm, 26,500 μm, 27,000 μm, 27,500 μm, 28,000 μm, 28,500 μm, 29,000 μm, 29,500 μm, 30,000 μm, 35,000 μm, 40,000 μm, 45,000 μm, 50,000 μm, 55,000 μm, 60,000 μm, 650,00 μm, 70,000 μm, 75,000 μm, 80,000 μm, 85,000 μm, 90,000 μm, 95,000 μm, 100,000 μm, 105,000 μm, 110,000 μm, 115,000 μm, 120,000 μm, 125,000 μm, 130,000 μm, 135,000 μm, 140,000 μm, 145,000 μm, 15,0000 μm, 155,000 μm, 160,000 μm, 165,000 μm, 170,000 μm, 175,000 μm, 180,000 μm, 185,000 μm, 190,000 μm, 195,000 μm, or 200,000 μm, specifically 50 μm to 100,000 μm, more specifically 10,000 μm to 50,000 μm. Within this range, the optical member can have good foldability.

The groove (120) may be an empty space, as shown in FIG. 1 and FIG. 2. Alternatively, the groove (130) may be filled with an adhesive or a resin having a predetermined index of refraction.

The groove (120) may be symmetric or asymmetric with respect to a centerline of the first surface (111). Whether the groove (120) is symmetric or asymmetric with respect to the centerline of the first surface 111 may depend on the location and width of a folding region when the optical member is used in an optical display device.

The optical functional layer (100) may provide additional functionality to the optical member in addition to reducing resistance to folding, reducing visibility of the groove, and improving resistance to indentation.

In one embodiment, the optical functional layer may provide one or more of the following: hard coating, anti-glare, anti-fingerprint, antireflection, low-reflection, glare reduction, antifouling, diffusion, and refraction functions. Preferably, the optical functional layer is a hard coating layer to facilitate improvement in indentation resistance and impact resistance of the optical member when the optical member is disposed at a viewer side of an optical display device. In the following, the present invention will be described using an example in which the optical functional layer is a hard coating layer.

The hard coating layer may be formed of a composition for a (meth)acrylic based, urethane based, urethane (meth)acrylate based, epoxy based, or silicone-based coating layer. In one embodiment, the hard coating layer may be a urethane (meth)acrylate-based coating layer to improve impact resistance and indentation resistance of the optical member.

The hard coating layer may be formed of a composition for a urethane (meth)acrylate-based hard coating layer that includes a urethane (meth)acrylate based oligomer, a (meth)acrylate based monomer, inorganic particles, and an initiator.

The urethane (meth)acrylate based oligomer may be prepared by polymerization of a polyfunctional polyol, a polyfunctional isocyanate compound, and a hydroxyl group-containing (meth)acrylate compound. The polyfunctional polyol may include any of the polyfunctional polyols described above, and the polyfunctional isocyanate compound may include any of the polyfunctional isocyanate compounds described above. The hydroxyl group-containing (meth)acrylate compound may include hydroxyethyl (meth)acrylate, pentaerythritol tri(meth)acrylate, dipentaerythritol penta(meth)acrylate, hydroxypropyl (meth)acrylate, hydroxybutyl (meth)acrylate, chlorohydroxypropyl (meth)acrylate, hydroxylhexyl (meth)acrylate, and the like, without being limited thereto.

The urethane (meth)acrylate based oligomer may include only one type of urethane (meth)acrylate based oligomer, or may include a mixture of two or more types of urethane (meth)acrylate based oligomers having different elongations or weight average molecular weights. For example, the mixture may include a first urethane (meth)acrylate based oligomer and a second urethane (meth)acrylate based oligomer.

The first urethane (meth)acrylate based oligomer may be hepta- to decafunctional (meth)acrylate oligomer and may have a weight average molecular weight of 1,000 g/mol to less than 4,000 g/mol and an elongation of 1% to less than 15%. Preferably, the first urethane (meth)acrylate based oligomer is a nona- to decafunctional (meth)acrylate oligomer having a weight average molecular weight of 1,500 g/mol to 2,500 g/mol and an elongation of 5% to 10%. Within these ranges, the first urethane (meth)acrylate based oligomer can help to improve impact resistance, scratch resistance, and flexural properties of the optical member.

The second urethane (meth)acrylate based oligomer may be tetra- to hexafunctional (meth)acrylate oligomer and may have a weight average molecular weight of 4,000 g/mol to 8,000 g/mol and an elongation of 15% to 25%. Preferably, the second urethane (meth)acrylate based oligomer is a penta- to hexafunctional (meth)acrylate oligomer having a weight average molecular weight of 4,000 g/mol to 6,000 g/mol and an elongation of 15% to 20%. Within these ranges, impact resistance, scratch resistance, and foldability of the optical member can be improved even with a thin hard coating layer while further ensuring stretchability of the hard coating layer.

In terms of solid content, the urethane (meth)acrylate based oligomer may be present in an amount of 40 parts by weight to 80 parts by weight relative to a total of 100 parts by weight of the urethane (meth)acrylate based oligomer, the (meth)acrylate based monomer, and the inorganic particles. Within this range, the optical member can have good properties in terms of impact resistance, scratch resistance, and foldability. Herein, "solid content" refers to the content of all components of the hard coating layer composition, excluding a solvent.

The (meth)acrylate based monomer is a bi- to hexafunctional (meth)acrylate based monomer and serves to improve hardness of the hard coating layer by being cured together with the first urethane (meth)acrylate based oligomer and the second urethane (meth)acrylate based oligomer.

The (meth)acrylate based monomer may include: bifunctional (meth)acrylates, such as 1,4-butanediol di(meth)acrylate, 1,6-hexanediol di(meth)acrylate, neopentyl glycol di(meth)acrylate, polyethylene glycol di(meth)acrylate, neopentyl glycol adipate di(meth)acrylate, dicyclopentanyl di(meth)acrylate, caprolactone-modified dicyclopentenyl di(meth)acrylate, ethylene oxide-modified di(meth)acrylate, di(meth)acryloxyethyl isocyanurate, allylated cyclohexyl di(meth)acrylate, tricyclodecane dimethanol (meth)acrylate, dimethylol dicyclopentane di(meth)acrylate, ethylene oxide-modified hexahydrophthalic acid di(meth)acrylate, tricyclodecane dimethanol (meth)acrylate, neopentyl glycol-modified trimethylpropane di(meth)acrylate, adamantane di(meth)acrylate, or 9,9-bis[4-(2-acryloyloxyethoxy)phenyl]fluorene; trifunctional (meth)acrylates, such as trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, or tris(meth)acryloxyethyl isocyanurate; tetrafunctional (meth)acrylates, such as diglycerin tetra(meth)acrylate or pentaerythritol tetra(meth)acrylate; pentafunctional (meth)acrylates, such as dipentaerythritol penta(meth)acrylate; and hexafunctional (meth)acrylates, such as dipentaerythritol hexa(meth)acrylate or caprolactone-modified dipentaerythritol hexa(meth)acrylate, without being limited thereto. Preferably, the (meth)acrylate monomer is a tri- or tetrafunctional (meth)acrylate monomer to further improve impact resistance and scratch resistance of the optical member through adjustment of crosslinking density.

The (meth)acrylate based monomer may be present in an amount of 1 part by weight to 30 parts by weight, for example, 5 parts by weight to 20 parts by weight or 5 parts by weight to 15 parts by weight, relative to a total of 100 parts by weight of the urethane (meth)acrylate based oligomer, the (meth)acrylate based monomer, and the inorganic particles. Within this range, impact resistance, scratch resistance, and foldability of the optical member can be improved even with a thin hard coating layer.

The inorganic particles may function to improve abrasion resistance and scratch resistance of a surface protective film. The inorganic particles may include at least one selected from among silica, alumina, and zirconia. The inorganic particles may have an average particle diameter (D50) of 200 nm or less, specifically greater than 0 nm to 200 nm or less, more specifically 5 nm to 100 nm. Within this range, the inorganic particles can improve scratch resistance of the surface protective film without increase in haze of the hard coating layer.

The inorganic particles may be present in an amount of 0.01 parts by weight to 10 parts by weight, for example, 1 part by weight to 4 parts by weight, relative to a total of 100 parts by weight of the urethane (meth)acrylate based oligomer, the (meth)acrylate based monomer, and the inorganic particles. Within this range, impact resistance, scratch resistance, and foldability of the optical member can be improved even with a thin hard coating layer.

The initiator may include at least one selected from among a photoinitiator and a thermal initiator. Preferably, the initiator includes a photoinitiator to secure surface uniformity of the hard coating layer by preventing curing-induced shrinkage of the hard coating layer composition during curing of the hard coating layer composition.

The initiator may be an acetophenone compound, a benzyl ketal type compound, or a mixture thereof, without being limited thereto.

The initiator may be present in an amount of 0.01 parts by weight to 10 parts by weight, specifically 1 part by weight to 5 parts by weight, relative to a total of 100 parts by weight of the urethane (meth)acrylate based oligomer, the (meth)acrylate based monomer, and the inorganic particles. Within this range, complete curing reaction of the composition can be achieved, reduction in transmittance due to residues of the initiator can be prevented, bubbling of the composition can be reduced, and good reactivity of the composition can be ensured.

The hard coating layer composition may further include at least one selected from among a fluorine-based additive and a silicone-based additive.

The fluorine-based additive serves to improve abrasion resistance of the hard coating layer by improving surface properties of the hard coating layer, especially, slip properties of the hard coating layer, and may include any typical fluorine-based additive known to those skilled in the art. The fluorine-based additive may include at least one selected from among a fluorine-modified (meth)acrylate and a fluorine-modified siloxane compound.

The fluorine-based additive may be present in an amount of 0.01 parts by weight to 5 parts by weight, specifically 0.1 parts by weight to 2 parts by weight, relative to a total of 100 parts by weight of the urethane (meth)acrylate based oligomer, the (meth)acrylate based monomer, and the inorganic particles. Within this range, the fluorine-based additive can improve surface properties of the hard coating layer without affecting the other components of the composition.

The silicone-based additive serves to improve surface properties of the hard coating layer and may include any typical silicone-based additive known to those skilled in the art. For example, the silicone-based additive may include a polyether-modified acrylic polydimethylsiloxane, without being limited thereto.

The silicone-based additive may be present in an amount of 0.01 parts by weight to 5 parts by weight, specifically 0.1 parts by weight to 2 parts by weight or 0.1 parts by weight to 1 part by weight, relative to a total of 100 parts by weight of the urethane (meth)acrylate based oligomer, the (meth)acrylate based monomer, and the inorganic particles. Within this range, the silicone-based additive can improve surface properties of the hard coating layer without affecting the other components of the composition.

The hard coating layer may further include typical additives known to those skilled in the art to impart additional functionality to the hard coating layer. The additives may include an antioxidant, a stabilizer, a surfactant, a pigment, an antistatic agent, and a leveling agent, without being limited thereto.

The optical functional layer (100) may be formed by coating a functional layer composition, for example, the hard coating layer composition, to a predetermined thickness onto the upper surface of the support layer (200) and then applying an embossed pattern for formation of the groove to the composition, followed by curing. Alternatively, the optical functional layer (100) may be formed by coating the functional layer composition, for example, the hard coating layer composition, to a predetermined thickness on the upper surface of the support layer (200), followed by curing, and then forming the groove on the cured composition by laser cutting or the like.

In the following, an optical member according to another embodiment of the present invention will be described with reference to FIG. 4.

Referring to FIG. 4, the optical member may include a support layer (200), an optical functional layer (100), and an adhesive layer (300). The optical functional layer (100) may be formed on an upper surface of the support layer (200), and the adhesive layer (300) may be formed on a lower surface of the support layer (200). The optical member of FIG. 4 is substantially the same as the optical member of FIG. 1 except that the adhesive layer (300) is further formed on the lower surface of the support layer (200).

The adhesive layer (300) may function to adhesively bond the optical member to an adherend or the like. Herein, the "adherend" refers to an optical element incorporated in an optical display device, and may include, for example, a window film, a substrate film for a window film, and a cover glass, without being limited thereto. In one embodiment, the adherend may be a plastic film, including a polyester film, a polycarbonate film, a polyimide film, and the like, or a glass plate, including an ultra-thin glass (UTG) plate and the like.

The adhesive layer (300) may have a thickness of 5 μm to 200 μm, specifically 5 μm, 10 μm, 15 μm, 20 μm, 25 μm, 30 μm, 35 μm, 40 μm, 45 μm, 50 μm, 55 μm, 60 μm, 65 μm, 70 μm, 75 μm, 80 μm, 85 μm, 90 μm, 95 μm, 100 μm, 105 μm, 110 μm, 115 μm, 120 μm, 125 μm, 130 μm, 135 μm, 140 μm, 145 μm, 150 μm, 155 μm, 160 μm, 165 μm, 170 μm, 175 μm, 180 μm, 185 μm, 190 μm, 195 μm, or 200 μm, for example, 10 μm to 100 μm. Within this range, the adhesive layer 300 can be used in the optical member and can adhesively bond the support layer to the optical element in a reliable manner.

The adhesive layer (300) may include any typical adhesive layer known to those skilled in the art, such as a (meth)acrylate based adhesive layer, a urethane based adhesive layer, a urethane (meth)acrylate based adhesive layer, a silicone based adhesive layer, and an epoxy based adhesive layer. The adhesive layer may be formed by curing an adhesive layer composition by photocuring, thermal curing, or a combination thereof. Photocuring and/or thermal curing of the composition may be performed by any typical method known those skilled in the art. Preferably, the adhesive layer (300) is an adhesive layer having good properties in terms of impact resistance and/or folding reliability, thereby improving effectiveness of the optical member according to the present invention.

The adhesive layer (300) may have a storage modulus of 10 kPa to 500 kPa, specifically 10 kPa to 300 kPa, 10 kPa to 200 kPa, or 10 kPa to 150 kPa, as measured at 25°C. Within this range, the adhesive layer 300 can improve flexural reliability of the optical member without sacrificing adhesion to the support layer.

The adhesive layer (300) may have an index of refraction of 1.45 to 1.65, specifically 1.45 to 1.55. Within this range, the adhesive layer 300 can have an appropriate index of refraction relative to the support layer, thereby helping to ensure good appearance of the optical member.

In one embodiment, the adhesive layer may include a (meth)acrylic based adhesive layer formed of an adhesive layer composition including: a monomer mixture for a (meth)acrylic copolymer; and an initiator.

The monomer mixture may include at least one selected from among a hydroxyl group-containing (meth)acrylate, an alkyl group-containing (meth)acrylate, an ethylene oxide-containing monomer, a propylene oxide-containing monomer, an amine group-containing monomer, an alkoxy group-containing monomer, a phosphoric acid group-containing monomer, a sulfonic acid group-containing monomer, a phenyl group-containing monomer, a silane group-containing monomer, a carboxylic acid group-containing monomer, and an amide group-containing (meth)acrylate.

The adhesive layer (300) may have a glass transition temperature of -10°C or less, for example, -90°C to -20°C. Within this range, the adhesive layer 300 can improve folding reliability of the optical member at low temperatures.

The adhesive layer (300) may have a peel strength of 400 gf/inch or more, for example, 500 gf/inch to 1200 gf/inch, as measured with respect to a PET film. Within this range, the adhesive layer 300 can maintain sufficient interfacial adhesion.

The adhesive layer may further include particles to help improve flexural properties of the surface protective film at low temperatures and/or high temperatures or to help significantly improve impact resistance of the surface protective film. The adhesive layer may include organic particles, inorganic particles, or a combination thereof.

The organic particles may function to improve reliability of the adhesive layer at high temperatures by preventing delamination and/or lifting and/or bubbling of the adhesive layer at high temperatures through control over a modulus of the adhesive layer at high temperatures. In particular, organic nanoparticles can increase the modulus of the adhesive layer at high temperatures due to a high glass transition temperature thereof.

The organic particles may include organic nanoparticles having an average particle diameter of 10 nm to 400 nm, specifically 10 nm to 300 nm, more specifically 30 nm to 280 nm, more specifically 50 nm to 280 nm. Within this range, the organic particles can ensure that the adhesive layer has a total luminous transmittance of 90% or more in the visible spectrum and thus has good transparency, without affecting folding of the adhesive layer.

The organic particles may include core-shell type nanoparticles and simple nanoparticles, such as bead type nanoparticles, without being limited thereto. Preferably, the organic particles include core-shell type organic nanoparticles to further improve flexural reliability of the optical member according to the present invention at low temperatures and high temperatures. A core and shell of the organic nanoparticles may satisfy Equation 2. That is, both the core and shell of the organic nanoparticles may be formed of an organic material. This particle morphology can lead to good foldability of the adhesive layer and good balance between elasticity and flexibility of the adhesive layer.

[Equation 2]

$$Tg(c) < Tg(s),$$

(in Equation 2, Tg(c) is a glass transition temperature of the core (unit: °C), and Tg(s) is a glass transition temperature of the shell (unit: °C).

The core may have a glass transition temperature of -150°C to 10°C, specifically -150°C to -5°C, more specifically -150°C to -20°C. Within this range, the adhesive layer can have viscoelasticity at low temperatures and/or at room temperature. The core may include at least one selected from among poly(alkyl (meth)acrylate), polysiloxane, or polybutadiene having a glass transition temperature in the above range. The poly(alkyl (meth)acrylate) may include at least one selected from among poly(methyl acrylate), poly(ethyl acrylate), poly(propyl acrylate), poly(butyl acrylate), poly(isopropyl acrylate), poly(hexyl acrylate), poly(hexyl methacrylate), poly(ethylhexyl methacrylate), and polysiloxane, without being limited thereto.

The shell may have a glass transition temperature of 15°C to 150°C, specifically 35°C to 150°C, more specifically 50°C to 140°C. Within this range, the organic nanoparticles can have good dispersibility in the (meth)acrylic copolymer. The shell may include poly(alkyl methacrylate) having a glass transition temperature in the above range. For example, the shell may include at least one selected from among poly(methyl methacrylate) (PMMA), poly(ethyl methacrylate), poly(propyl methacrylate), poly(butyl methacrylate), poly(isopropyl methacrylate), poly(isobutyl methacrylate), and poly(cyclohexyl methacrylate), without being limited thereto.

The core may be present in an amount of 30 wt% to 99 wt%, specifically 40 wt% to 95 wt%, more specifically 50 wt% to 90 wt%, in the organic particles. Within this range, the adhesive layer can have good foldability over a wide temperature range. The shell may present in an amount of 1 wt% to 70 wt%, specifically 5 wt% to 60 wt%, more specifically 10 wt% to 50 wt%, in the organic particles. Within this range, the adhesive layer can have good foldability over a wide temperature range.

The organic particles may be present in an amount of 0 parts by weight to 20 parts by weight, specifically 0.1 parts by weight to 20 parts by weight, 0.5 parts by weight to 10 parts by weight, or 0.5 parts by weight to 8 parts by weight, relative to 100 parts by weight of the monomer mixture. Within this range, the adhesive layer can have a high modulus at high temperatures, good foldability at room temperature and high temperatures, and good viscoelasticity at low temperatures and/or room temperature.

The inorganic particles refer to particles formed of an inorganic material and may help to improve impact resistance of the surface protective film. The inorganic particles may include, for example, a metal oxide, such as silica and zirconia, a metal titanate, such as barium titanate, a sulfide, a selenide, and a telluride. Preferably, the inorganic particles include silica to improve impact resistance of the adhesive layer and to prevent increase in haze of the adhesive film by reducing a difference in index of refraction between the inorganic particles and an adhesive resin constituting the adhesive layer.

The inorganic particles may include particles having a smaller average particle diameter than the organic particles. This can make it easier to realize the desired effects of the present invention. The inorganic particles may include nanoparticles having an average particle diameter (D50) of 10 nm to 200 nm, specifically 10 nm to 150 nm, more specifically 10 nm to 100 nm. Within this range, the inorganic particles can improve impact resistance of the surface protective film without affecting folding of the surface protective film and can ensure that the adhesive layer has a total luminous transmittance of 90% or more and a haze of less than 1% in the visible spectrum and thus has good transparency.

The inorganic particles may be present in an amount of 0 parts by weight to 20 parts by weight, specifically 0.1 parts by weight to 20 parts by weight, 0.5 parts by weight to 10 parts by weight, or 0.5 parts by weight to 8 parts by weight, relative to 100 parts by weight of the monomer mixture including a hydroxyl group-containing (meth)acrylate and a comonomer. Within this range, the inorganic particles can significantly improve impact resistance of the surface protective film without affecting flexural properties of the surface protective film.

The initiator is substantially the same as the initiator used in the hard coating layer composition described above.

The initiator may be present in an amount of 0.001 parts by weight to 10 parts by weight, specifically 0.001 parts by weight to 5 parts by weight, relative to 100 parts by weight of the monomer mixture including the hydroxyl group-containing (meth)acrylate and the comonomer. Within this range, the initiator can facilitate formation of the adhesive layer and can prevent reduction in transparency of the surface protective film.

The adhesive layer composition may further include a crosslinking agent and a silane coupling agent. The crosslinking agent may include a bi- to hexafunctional (meth)acrylate-based photocurable monomer. Details thereof are well known to those skilled in the art.

The optical member according to this embodiment may include two or more functional layers stacked sequentially.

In the following, an optical member according to a further embodiment of the present invention will be described with reference to FIG. 5.

Referring to FIG. 5, the optical member according to this embodiment may be a stack of two optical members as described above with reference to FIG. 4. That is, the optical member according to this embodiment may have a structure in which the adhesive layer (300), the support layer (200), the optical functional layer (100), the adhesive layer (300), the support layer (200), and the optical functional layer (100) are stacked sequentially.

[Optical display device]

An optical display device according to the present invention includes the optical member according to the present invention. In one embodiment, the optical member may be disposed at a viewer side of the optical display device.

The optical display device may include: a light-emitting display device, such as an organic light-emitting display device; a liquid crystal display device; and the like. The optical display device may be a foldable display device, without being limited thereto.

[Mode for Invention]

Next, the present invention will be described in more detail with reference to some examples. However, it should be noted that these examples are provided for illustration only and are not to be construed in any way as limiting the present invention.

Example 1

A hard coating layer composition (solvent-free type, DS200EJ, SEKONIX Co., Ltd.) was pattern-coated onto an upper surface of a PET film (thickness: 50 $\mu$m, TU-94, SKC Co., Ltd.) as a support layer while irradiating the composition with light at a fluence of 300 mJ/cm$^2$, thereby manufacturing an optical member having a hard coating layer as shown in FIG. 2 and described in Table 1.

Examples 2 to 5

Optical members were manufactured in the same manner as in Example 1 except that the parameters related to the hard coating layer were changed as shown in Table 1.

Comparative Example 1

An optical member was manufactured in the same manner as in Example 1 except that the parameters related to the hard coating layer were changed as shown in Table 2 to form a functional layer 2 having a cross-section of FIG. 6(A) (consisting of a plane and another plane connected to the plane) on the support layer 1.

Comparative Example 2

An optical member was manufactured in the same manner as in Example 1 except that the parameters related to the hard coating layer were changed as shown in Table 2 to form a functional layer 2 having a cross-section of FIG. 6(B) (having a curved surface or entirely consisting of a concave curved surface) on the support layer 1.

Comparative Examples 3 and 4

Optical members were manufactured in the same manner as in Example 1 except that the parameters related to the hard coating layer were changed as shown in Table 1.

The parameters related to each of the hard coating layers of Examples 1 to 5 and Comparative Examples 1 to 4 are shown Table 1.

[Table 1]

| | a (μm) | b (μm) | R1 (mm) | R2 (mm) | H1 (μm) | H2 (μm) | W1 (μm) | W3 (μm) |
|---|---|---|---|---|---|---|---|---|
| Example 1 | 5,000 | 50 | 100 | 100 | 10 | 60 | 10,000 | 20,000 |
| Example 2 | 5,000 | 100 | 100 | 100 | 10 | 110 | 10,000 | 20,000 |
| Example 3 | 10,000 | 50 | 100 | 100 | 10 | 60 | 10,000 | 30,000 |
| Example 4 | 10,000 | 100 | 100 | 100 | 10 | 110 | 10,000 | 30,000 |
| Example 5 | 20,000 | 50 | 100 | 100 | 10 | 60 | 10,000 | 50,000 |
| Comparative Example 3 | 200 | 100 | 0.5 | 0.5 | 10 | 110 | 10,000 | 10,400 |
| Comparative Example 4 | 100 | 200 | 1 | 1 | 10 | 210 | 10,000 | 10,200 |

[Table 2]

| | Shape | Flat portion | Groove | | |
|---|---|---|---|---|---|
| | | D1 (μm) | D2 (μm) | A1 (μm) | A2 (μm) |
| Comparative Example 1 | FIG. 6(A) | 10 | 5 | 5 | 20000 |
| Comparative Example 2 | FIG. 6(B) | 350 | 300 | 50 | 30000 |

Each of the optical members manufactured in Examples and Comparative Examples was evaluated as to the following properties. Results are shown in Table 3.

(1) Folding reliability: A specimen for evaluation of folding reliability was prepared by laminating an adhesive layer onto a stack of PET film (thickness: 50 μm, TU-94, SKC Co., Ltd.)/adhesive layer/PET film (thickness: 50 μm, TU-94, SKC Co., Ltd.)/adhesive layer/PET film (thickness: 50 μm, TU-94, SKC Co., Ltd.), followed by attaching each of the optical members manufactured in Examples 1 to 5 and Comparative Examples 1 to 4 to the adhesive layer. Here, a groove of the hard coating layer was disposed at an outermost side of the specimen. As the adhesive layers, an acrylic adhesive layer was used. After aging at 25°C for 72 hours, the specimen was manually folded and unfolded 20 times about the groove. Then, the presence of cracking and/or delamination on the groove was observed. When cracking and/or delamination was not observed, a corresponding specimen was rated as "o" and, when any cracking and/or delamination was observed, a corresponding specimen was rated as "X".

(2) Visibility of groove: An adhesive layer was laminated onto a foldable module, followed by attaching each of the optical members manufactured in Examples 1 to 5 and Comparative Examples 1 to 4 on the adhesive layer. Then, the foldable module was operated, followed by observing visibility of the groove with the naked eye. When the groove was not visible, a corresponding specimen was rated as " X " and, when there was any visibility of the groove, a corresponding specimen was rated as "o".

(3) Resistance to impact and indentation: Each of the optical members manufactured in Examples 1 to 5 and Comparative Examples 1 to 4 was placed on a glass plate with the hard coating layer disposed at an outermost side of the optical member. A pen having a dimeter of 0.7 mm and a circular cross-section was dropped vertically onto the groove of the hard coating layer. Then, the presence of an indentation and/or an imprint on the hard coating layer and the support layer was observed under a 3D microscope. A minimum height from which dropping the pen resulted in an indentation and/or an imprint on the hard coating layer and the support layer was measured. A greater value of the height indicates better resistance to impact and indentation. When the height was 10 cm or higher, a corresponding specimen was rated as "o" and, when the height was less than 10 cm, a corresponding specimen was rated as "X".

[Table 3]

| | Example | | | | | Comparative Example | | | |
|---|---|---|---|---|---|---|---|---|---|
| | 1 | 2 | 3 | 4 | 5 | 1 | 2 | 3 | 4 |
| Folding reliability | ○ | ○ | ○ | ○ | ○ | ○ | X | ○ | ○ |
| Visibility of groove | X | X | X | X | X | ○ | ○ | ○ | ○ |
| Resistance to impact and indentation | ○ | ○ | ○ | ○ | ○ | X | ○ | ○ | ○ |

As shown in Table 3, it was confirmed that the optical members according to the present invention could be used in a foldable display device due to low resistance to repeated folding, could be disposed at an outermost side of a display device by minimizing or eliminating visibility of the groove, and exhibited good resistance to impact or indentation.

Conversely, the optical members of the Comparative Example, not satisfying the requirements set forth herein, could not provide the desired effects of the present invention.

It should be understood that various modifications, changes, alterations, and equivalent embodiments can be made by those skilled in the art without departing from the spirit and scope of the invention.

**Claims**

1. An optical member comprising:

   a support layer; and an optical functional layer formed on one surface of the support layer,
   wherein the optical functional layer comprises a groove comprising an inclined surface,
   the inclined surface is formed with at least one convex portion extending from a flat portion of the optical functional layer,
   the convex portion is a curved surface having a radius of curvature of 1 mm or more, and
   the inclined surface satisfies Equation 1:

   $$[\text{Equation 1}]$$

   $$a \geq b,$$

   (where a is a width of the inclined surface formed with the convex portion and b is a height of the inclined surface formed with the convex portion).

2. The optical member as claimed in claim 1, wherein the inclined surface is further formed with a concave portion connected to the convex portion.

3. The optical member as claimed in claim 2, wherein the concave portion is a curved surface having a radius of curvature of 1 mm or more.

4. The optical member as claimed in claim 1, wherein a ratio of a to b (a/b) ranges from 1 to 100,000.

5. The optical member as claimed in claim 2, wherein the groove further comprises a first surface connected to the concave portion.

6. The optical member as claimed in claim 5, wherein a ratio of a width of the first surface to a maximum width of the groove ranges from greater than 0 to 0.5 or less.

7. The optical member as claimed in claim 5, wherein an angle $\alpha$ of a plane connecting the flat portion to the first surface with respect to a base of the inclined surface ranges from greater than 0° to 45° or less.

8. The optical member as claimed in claim 1, wherein the optical functional layer is a hard coating layer.

9. An optical display device comprising the optical member as claimed in any one of claims 1 to 8.

【FIG. 1】

【FIG. 2】

【FIG. 3】

【FIG. 4】

【FIG. 5】

【FIG. 6】

(A)                    (B)

## INTERNATIONAL SEARCH REPORT

| | International application No. |
|---|---|
| | **PCT/KR2022/011441** |

**A.    CLASSIFICATION OF SUBJECT MATTER**

**G02B 1/10**(2006.01)i; **G09F 9/30**(2006.01)i

According to International Patent Classification (IPC) or to both national classification and IPC

**B.    FIELDS SEARCHED**

Minimum documentation searched (classification system followed by classification symbols)

G02B 1/10(2006.01); G02B 1/11(2006.01); G02B 26/00(2006.01); G02F 1/1333(2006.01); G09F 9/00(2006.01); G09F 9/30(2006.01); H01L 51/52(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴더블 디스플레이(foldable display), 홈(groove), 볼록부(convex), 곡률 반경 (curvature radius)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2017-0026747 A (SAMSUNG DISPLAY CO., LTD.) 09 March 2017 (2017-03-09) See paragraphs [0073]-[0076]; and figure 6. | 1-9 |
| Y | KR 10-2018-0078929 A (LG DISPLAY CO., LTD.) 10 July 2018 (2018-07-10) See paragraph [0055]; claim 1; and figure 2. | 1-9 |
| A | KR 10-2015-0021167 A (SAMSUNG DISPLAY CO., LTD.) 02 March 2015 (2015-03-02) See claim 1; and figures 6-9. | 1-9 |
| A | KR 10-2020-0002576 A (LG DISPLAY CO., LTD.) 08 January 2020 (2020-01-08) See claim 1; and figures 7a-7c. | 1-9 |
| A | US 2015-0147532 A1 (SAMSUNG DISPLAY CO., LTD.) 28 May 2015 (2015-05-28) See claim 1; and figures 4A-4C. | 1-9 |

| ☐ Further documents are listed in the continuation of Box C. | ☑ See patent family annex. |
|---|---|

\*    Special categories of cited documents:
"A"   document defining the general state of the art which is not considered to be of particular relevance
"D"   document cited by the applicant in the international application
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| **15 November 2022** | **16 November 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2022/011441** |

| Patent document cited in search report | | | Publication date (day/month/year) | Patent family member(s) | | | Publication date (day/month/year) |
|---|---|---|---|---|---|---|---|
| KR | 10-2017-0026747 | A | 09 March 2017 | CN | 106486016 | A | 08 March 2017 |
| | | | | CN | 106486016 | B | 22 December 2020 |
| | | | | EP | 3136158 | A1 | 01 March 2017 |
| | | | | EP | 3136158 | B1 | 13 October 2021 |
| | | | | KR | 10-2383097 | B1 | 07 April 2022 |
| | | | | US | 10375839 | B2 | 06 August 2019 |
| | | | | US | 10897826 | B2 | 19 January 2021 |
| | | | | US | 2017-0064845 | A1 | 02 March 2017 |
| | | | | US | 2019-0350092 | A1 | 14 November 2019 |
| KR | 10-2018-0078929 | A | 10 July 2018 | | None | | |
| KR | 10-2015-0021167 | A | 02 March 2015 | CN | 104424851 | A | 18 March 2015 |
| | | | | CN | 104424851 | B | 02 November 2018 |
| | | | | EP | 2840460 | A1 | 25 February 2015 |
| | | | | EP | 2840460 | B1 | 23 August 2017 |
| | | | | KR | 10-2039496 | B1 | 04 November 2019 |
| | | | | US | 2015-0049428 | A1 | 19 February 2015 |
| | | | | US | 2016-0048171 | A1 | 18 February 2016 |
| | | | | US | 9189027 | B2 | 17 November 2015 |
| | | | | US | 9429999 | B2 | 30 August 2016 |
| KR | 10-2020-0002576 | A | 08 January 2020 | CN | 110660323 | A | 07 January 2020 |
| | | | | US | 11360517 | B2 | 14 June 2022 |
| | | | | US | 2020-0004295 | A1 | 02 January 2020 |
| US | 2015-0147532 | A1 | 28 May 2015 | CN | 104680941 | A | 03 June 2015 |
| | | | | CN | 104680941 | B | 04 June 2019 |
| | | | | JP | 2015-106152 | A | 08 June 2015 |
| | | | | JP | 6382652 | B2 | 29 August 2018 |
| | | | | KR | 10-2015-0061965 | A | 05 June 2015 |
| | | | | KR | 10-2132235 | B1 | 10 July 2020 |
| | | | | US | 10295818 | B2 | 21 May 2019 |
| | | | | US | 11181732 | B2 | 23 November 2021 |
| | | | | US | 2019-0293921 | A1 | 26 September 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130010233